Europäisches Patentamt

European Patent Office

Office européen des brevets

(11) Veröffentlichungsnummer: **0 156 010**
**B1**

(12) **EUROPÄISCHE PATENTSCHRIFT**

(45) Veröffentlichungstag der Patentschrift:
**19.11.87**

(21) Anmeldenummer: **84114910.7**

(22) Anmeldetag: **07.12.84**

(51) Int. Cl.⁴: **F 16 H 55/48**

(54) **Bauteil aus polymerem Werkstoff.**

(30) Priorität: **29.03.84 DE 3411640**

(43) Veröffentlichungstag der Anmeldung:
**02.10.85 Patentblatt 85/40**

(45) Bekanntmachung des Hinweises auf die Patenterteilung:
**19.11.87 Patentblatt 87/47**

(84) Benannte Vertragsstaaten:
**DE FR GB IT**

(56) Entgegenhaltungen:
**FR - A - 1 080 946**
**FR - A - 1 310 080**
**FR - A - 2 188 752**
**FR - A - 2 373 731**
**GB - A - 4 095**
**GB - A - 472 309**

(73) Patentinhaber: **INA Wälzlager Schaeffler KG,
Industriestrasse 1-3, D-8522 Herzogenaurach (DE)**

(72) Erfinder: **Röhrig, Harald, Dipl.-Ing., Argelanderstrasse 9,
D-5300 Bonn (DE)**
Erfinder: **Rudolf, Günther, Techniker, Häckersteig 10,
D-8552 Höchstadt (DE)**

## Beschreibung

Die Erfindung betrifft ein Bauteil aus polymerem Werkstoff, das eine Bohrung zur Aufnahme einer Welle aufweist, wobei das Bauteil in dem die Bohrung umgebenden Bereich im wesentlichen planparallele, rechtwinklig zur Bohrungsachse verlaufende Stirnflächen besitzt und zwischen sich im wesentlichen radial erstreckenden Anschlagflächen der Welle eingespannt ist.

Beim Einspannen derartiger Bauteile zwischen sich im wesentlich radial erstreckenden Anschlagflächen der Welle ist in den überwiegenden Fällen kein zuverlässiger Festsitz zu erreichen, da der polymere Werkstoff durch Kaltfluss oder wechselnde Temperaturen schwinden kann. Dadurch kommt es insbesondere dann zum vorzeitigen Ausfall eines derartigen Bauteiles, wenn dieses Drehmomente übertragen muss, wie dies z.B. bei Riemenscheiben oder Spannrollen der Fall ist.

Um dies zu verhindern ist es bereits bekannt (z.B. FR-A-1 310 080), die Bohrung selbst oder den die Bohrung umgebenden Bereich mit Blechteilen zu armieren. Durch die eingespritzten oder nachträglich eingelegten Blechteile wird zwar ein sicherer Halt erreicht, diese Blechteile müssen jedoch in entsprechenden Werkzeugen für jeden Anwendungsfall separat gefertigt werden, was zu einer beträchtlichen Erhöhung der Gestehungskosten führt.

Der Erfindung liegt die Aufgabe zugrunde, Bauteile der genannten Art so auszubilden und zu verbessern, dass mit einfachsten Mitteln ein sicheres Einspannen zwischen den Anschlagflächen einer Welle möglich ist.

Erfindungsgemäss wird diese Aufgabe dadurch gelöst, dass in dem die Bohrung umgebenden Bereich des Bauteiles mehrere über den Umfang verteilte, axial durchgehende Metallstifte angeordnet sind, die sich mit ihren Enden an den Anschlagflächen abstützen. Durch diese Massnahme wird in vorteilhafter Weise ein zuverlässiger Festsitz erreicht, wobei der dabei erzielte Kraftschluss auch für eine Drehmomentübertragung ausreichend ist, da die Einspannkraft von den Metallstiften aufgenommen wird. Im Hinblick auf die Härte des zur Verwendung kommenden polymeren Werkstoffes ist dabei die Länge der Metallstifte von Fall zu Fall so abzustimmen, dass das Bauteil mit seinen Stirnflächen spielfrei zwischen den Anschlagflächen der Welle aufgenommen ist, um ein axiales Wandern mit der Folge eines vorzeitigen Verschleisses zu verhindern.

In weiterer Ausgestaltung der Erfindung ist vorgesehen, dass die Enden der Metallstifte gegenüber deren Gesamtquerschnitt reduziert, insbesondere mit Spitzen oder Schneiden versehen sind. Dadurch ergibt sich der Vorteil, dass sich die beiden Enden der Metallstifte beim Verspannen in die Anschlagflächen der Welle eindrücken, wodurch eine formschlüssige Verbindung erzielt wird, mit Hilfe derer ein höheres Drehmoment übertragen werden kann.

Nach einer anderen Ausführungsform der Erfindung wird vorgeschlagen, dass die Bohrung mit einer Keilnut versehen ist, in deren unmittelbarer Nähe beidseitig je ein Metallstift angeordnet ist. Eine solche Ausgestaltung ist dann besonders zweckmässig, wenn die Keilnut nicht nur zur Montagepositionierung sondern zur Drehmomentübertragung dient, da die Metallstifte einer Verformung der Keilnut in Umfangsrichtung entgegenwirken.

Ein Verfahren zur Herstellung eines Bauteiles aus polymerem Werkstoff sieht vor, dass die Metallstifte eingegossen oder eingespritzt werden.

Nach einem anderen Verfahren zur Herstellung eines Bauteiles aus einem polymeren Werkstoff ist vorgesehen, dass die Metallstifte nachträglich in die Bohrungen eingesetzt werden.

Ausführungsbeispiele der Erfindung sind in der Zeichnung anhand einer Keilriemenscheibe dargestellt. Es zeigen:

Fig. 1 eine erfindungsgemässe Keilriemenscheibe in Ansicht,

Fig. 2 einen Längsschnitt nach der Linie II-II der Fig. 1, wobei die Riemenscheibe auf eine Welle montiert ist und

Fig. 3 einen teilweisen Längsschnitt durch ein anderes Ausführungsbeispiel.

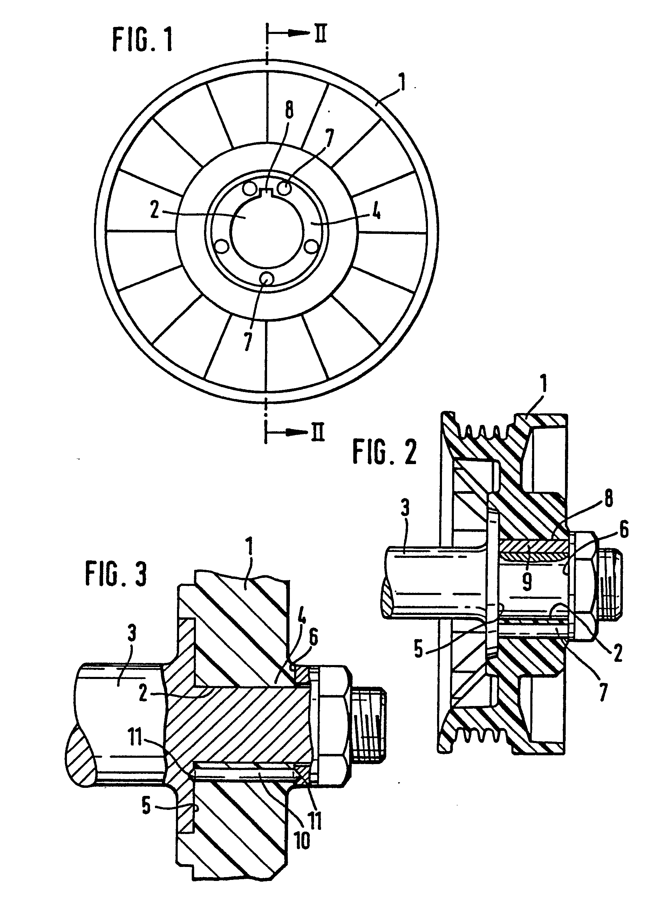

Die Keilriemenscheibe 1 weist eine Bohrung 2 zur Aufnahme einer Welle 3 auf und ist in dem die Bohrung 2 umgebenden Bereich 4 zwischen sich radial erstreckenden Anschlagflächen 5 und 6 der Welle 3 eingespannt. Gemäss den Fig. 1 und 2 sind in dem die Bohrung umgebenden Bereich 4 mehrere über den Umfang verteilte, axial durchgehende Metallstifte 7 angeordnet, die sich mit ihren Enden an den Anschlagflächen 5 und 6 abstützen. Die Bohrung 2 ist mit einer Keilnut 8 versehen, in deren unmittelbarer Nähe je ein Metallstift 7 angeordnet ist. In eine Ausnehmung der Welle 3 ist eine Passfeder 9 eingelegt, die andererseits in die Keilnut 8 eingreift.

Beim Ausführungsbeispiel nach Fig. 3 sind die Metallstifte 10 an ihren Enden mit Spitzen 11 versehen, die in die Anschlagflächen 5 und 6 der Welle 3 eingedrückt sind.

## Patentansprüche

1. Bauteil (1) aus polymerem Werkstoff, das eine Bohrung (2) zur Aufnahme einer Welle (3) aufweist, wobei das Bauteil (1) in dem die Bohrung (2) umgebenden Bereich (4) im wesentlichen planparallele, rechtwinklig zur Bohrungsachse verlaufende Stirnflächen besitzt und zwischen sich im wesentlichen radial erstreckenden Anschlagflächen (5, 6) der Welle (3) eingespannt ist, dadurch gekennzeichnet, dass in dem die Bohrung (2) umgebenden Bereich (4) des Bauteiles (1) mehrere über den Umfang verteilte, axial durchgehende Metallstifte (7) angeordnet sind, die sich mit ihren Enden an den Anschlagflächen (5, 6) abstützen.

2. Bauteil (1) aus polymerem Werkstoff nach Anspruch 1, dadurch gekennzeichnet, dass die Enden der Metallstifte (10) gegenüber deren Gesamtquerschnitt reduziert, insbesondere mit Spitzen (11) oder Schneiden versehen sind.

3. Bauteil (1) aus polymerem Werkstoff nach Anspruch 1 oder 2, dadurch gekennzeichnet, dass die Bohrung (2) mit einer Keilnut (8) versehen ist, in deren unmittelbarer Nähe beidseitig je ein Metallstift (7) angeordnet ist.

4. Verfahren zur Herstellung eines Bauteiles (1) aus polymerem Werkstoff nach Anspruch 1, 2 oder 3, dadurch gekennzeichnet, dass die Metallstifte (7) eingegossen oder eingespritzt werden.

5. Verfahren zur Herstellung eines Bauteiles (1) aus polymeren Werkstoff nach Anspruch 1, 2 oder 3, dadurch gekennzeichnet, dass die Metallstifte (7) nachträglich in Bohrungen eingesetzt werden.

## Claims

1. A component (1) made of a polymeric substance and having a bore (2) to receive a shaft (3), the component (1) having, in the zone (4) around the bore (2), substantially plane and parallel end faces disposed perpendicularly to the bore axis, the component being clamped between substantially radial abutment surfaces (5, 6) of the shaft (3), characterised in that a number of axially continuous metal pins (7) distributed over the periphery are disposed in the zone (4) around the bore (2) and bear by way of their ends on the abutment surfaces (5, 6).

2. A component (1) made of a polymeric substance according to claim 1, characterised in that the ends of the metal pins (10) are reduced as compared with the full pin cross-section and more particularly have points (11) or cutting edges.

3. A component (1) made of a polymeric substance according to claim 1 or 2, characterised in that the bore (2) is formed with a keyway (8) and metal pins (7) are disposed one on each side of the keyway in the immediate vicinity thereof.

4. A process for the production of a component (1) made of a polymeric substance according to claim 1, 2 or 3, characterised in that the metal pins (7) are surrounded by the polymeric substance by casting or injection-moulding.

5. A process for the production of a component (1) made of a polymeric substance according to claim 1, 2 or 3, characterised in that the metal pins (7) are introduced into bores subsequently.

## Revendications

1. Pièce (1) en matériau polymère, comportant un alésage (2) pour la réception d'un arbre (3), la pièce (1) présentant, dans la zone (4) entourant l'alésage (2), des surfaces sensiblement parallèles entre elles, s'étendant perpendiculairement à l'axe de l'alésage, et étant serrée entre des surfaces de butée (5, 6) de l'arbre (3) s'étendant en principe radialement, caractérisée en ce que plusieurs broches métalliques (7) traversant axialement la pièce et réparties sur la circonférence sont disposées dans la zone (4) de la pièce (1) entourant l'alésage (2), ces broches prenant appui par leurs extrémités contre les surfaces de butée (5, 6).

2. Pièce (1) en matériau polymère suivant la revendication 1, caractérisée en ce que les extrémités des broches métalliques (10) présentent une section droite réduite par rapport à leur section droite d'ensemble et sont munies en particulier de parties en pointes (11) ou d'arêtes.

3. Pièce (1) en matériau polymère suivant la revendication 1, caractérisée en ce que l'alésage (2) est muni d'une rainure de clavetage (8) de part et d'autre de laquelle est disposée chaque fois une broche métallique (7) placée au voisinage immédiat de la rainure de clavetage.

4. Procédé pour la fabrication d'une pièce (1) en matériau polymère suivant la revendication 1, 2 ou 3, caractérisé en ce que les broches métalliques (7) sont noyées en place par moulage par coulée ou par injection.

5. Procédé pour la fabrication d'une pièce (1) en matériau polymère suivant la revendication 1, 2 ou 3, caractérisé en ce que les broches métalliques (7) sont insérées ultérieurement dans des perçages.

0 156 010

FIG. 1

FIG. 2

FIG. 3

5